# EUROPÄISCHE PATENTANMELDUNG

(11) **EP 2 238 834 A1**
(43) Veröffentlichungstag der Anmeldung: **13.10.2010**
(21) Anmeldenummer: 09005078.2
(22) Anmeldetag: 07.04.2009
(51) Int. Cl.: A01N 47/36, A01N 47/30, A01N 43/707

(54) **Defoliant auf Basis von Thidiazuron und 1,2,4-Triazinonen**

(71) Anmelder: Bayer CropScience Aktiengesellschaft, 40789 Monheim (DE)
(72) Erfinder: Bickers, Udo, Dr., 65779 Kelkheim (DE); Sixl, Frank, Dr., 26529 Rechtsupweg (DE)

(57) **Zusammenfassung**

Eine Mischung, enthaltend
(A) Thidiazuron (oder Thidiazuron und Diuron) und
(B) eine oder mehrere Verbindungen aus der Gruppe der herbiziden 1,2,4-Triazinone, vorzugsweise Metribuzin und/oder Metamiron,

eignet sich als Mittel zur Entlaubung und/oder zur Reduktion des Wiederaustriebs, insbesondere in Baumwollkulturen.

## Beschreibung

Die Erfindung betrifft das Gebiet der Defoliantien, insbesondere Thidiazuron enthaltende Mischungen und deren Verwendung in Baumwollkulturen.

Thidiazuron ist seit geraumer Zeit als Defoliant, insbesondere für den Einsatz in Baumwollkulturen, bekannt (siehe z.B. "The e-Pesticide Manual", Version 4.0, 2006-07 oder "The Pesticide Manual", 14. Auflage, British Crop Protection Council, Hampshire 2006).

Auch der Einsatz von Thidiazuron in Mischungen ist beschrieben, siehe z.B. DE 26 46 712 A.

Da die Anforderungen an moderne Defoliantien in ökonomischer und ökologischer Hinsicht jedoch ständig steigen, beispielsweise was Wirkung, Aufwandmenge, Rückstände, Toxizität und günstige Herstellbarkeit angeht, besteht die ständige Aufgabe, beispielsweise durch die Kombination bekannter Wirkstoffe neue Defolianten zu entwickeln, die zumindest in Teilbereichen Vorteile gegenüber den bekannten aufweisen.

Es wurde nun überraschend gefunden, dass Thidiazuron und bereits kommerziell verwendete Mischungen von Thidiazuron und Diuron in Mischung mit Verbindungen aus der Gruppe der herbiziden 1,2,4-Triazinone synergistische Wirkungen aufweisen.

Darüber hinaus wurde überraschend gefunden, dass Verbindungen aus der Gruppe der herbiziden 1,2,4-Triazinone in Kombination mit Thidiazuron-haltigen Präparaten den Wiederaustrieb von Pflanzen, vorzugsweise Nutzpflanzen, besonders bevorzugt Baumwolle, deutlich reduziert.

Gegenstand der Erfindung ist daher eine Mischung, enthaltend
(A) Thidiazuron und
(B) eine oder mehrere Verbindungen aus der Gruppe der herbiziden 1,2,4-Triazinone.

Die oben genannte Mischung kann als Komponente (A) auch die Mischung von Thidiazuron und Diuron enthaltend.

Die erfindungsgemäßen Mischungen eignen sich insbesondere zum Einsatz als Defolianten in Baumwollkulturen, beispielsweise durch eine schnelle und/oder erhöhte Wirkung oder niedrigere Aufwandmengen.

Der Begriff Defoliant im Sinne der Erfindung ist synonym mit "Entlaubungsmittel" und "Desiccant" und umfasst auch die bekannte wachstumsregulatorische Wirkung von Thidiazuron und Thidiazuron enthaltenden Mischungen.

Die für Komponente (A) verwendeten Wirkstoffe (a.i.) Thidiazuron und Diuron sind bekannt und kommerziell erhältlich: Thidiazuron und Diuron von der Firma Bayer Crop Science.

Mischungen von Thidiazuron und Diuron sind beispielsweise unter der Bezeichnung ®Dropp Ultra kommerziell erhältlich (Bayer CropScience). Solche Mischungen sind beispielsweise in US 4,613,354 A beschrieben.

Die Wirkstoffe sind mit Angaben zu Herstellung, Mischung und Handhabung beispielsweise in "The Pesticide Manual", 14. Auflage (s.o.), beschrieben und haben dort folgende Eintragungsnummern: Thidiazuron 814, Diuron 291. Bevorzugt als Komponente (A) ist Thidiazuron.

Die für Komponente (B) verwendbaren Verbindungen gehören der chemischen Klasse der herbiziden 1,2,4-Triazinone an. Diese Gruppe und ihre Wirksamkeit als

Herbizide ist bekannt und ist beispielsweise in "The Pesticide Manual" (s.o.), beschrieben. Wichtige Wirkstoffe (a.i.) aus dieser Gruppe sind Metribuzin und Metamiron. Sie sind kommerziell erhältlich: Metribuzin und Metamiron von der Firma Bayer CropScience.

Die Wirkstoffe sind mit Angaben zu Herstellung, Mischung und Handhabung beispielsweise in "The Pesticide Manual" (s.o.), beschrieben und haben dort folgende Eintragungsnummern: Metribuzin 573 und Metamiron 540. Bevorzugt als Komponente (B) sind Metribuzin und Metamiron, besonders bevorzugt Metribuzin.

Die Kombination der Wirkstoffe kann in an sich üblicher Weise eingesetzt werden, beispielsweise durch Sprühapplikation einer aus Einzelformulierungen der Wirkstoffe im Tank-Mix hergestellten Spritzbrühe oder einer durch Verdünnen mit Wasser aus einer Mischformulierung der Wirkstoffe hergestellten Spritzbrühe. Für die Applikation kommen vor allem solche Methoden in Frage, die für die Anwendung der Einzelwirkstoffe üblich sind und eine gemeinsame Applikation ermöglichen.

Die Anwendung kann prinzipiell auch durch aufeinander folgende Applikationen der Einzelwirkstoffe (Komponenten) erfolgen, wobei der mögliche Zeitabstand in einfachen, routinemäßigen Vorversuchen ermittelt werden kann. Bevorzugt ist jedoch die gemeinsame Applikation. Die Wirkstoffe können gegebenenfalls auch in Kombination mit weiteren Pflanzenschutzmittel-Wirkstoffen eingesetzt werden.

Bei gleicher Wirkung ist die Aufwandmenge eines Einzelwirkstoffs in der Kombination im Vergleich zur Aufwandmenge des betreffenden Einzelwirkstoffes bei alleiniger Anwendung wesentlich verringert. Die optimale Wahl des Gewichtsverhältnisses und der Aufwandmengen ist beispielsweise vom Entwicklungsstadium, von Umweltfaktoren und Klimabedingungen oder auch von der Art gegebenenfalls zusätzlich eingesetzter Pflanzenschutzmittel-Wirkstoffe abhängig und kann vom Fachmann in einfachen Routineversuchen schnell ermittelt werden.

Die Aufwandmenge für die Komponente (A) liegt im allgemeinen im Bereich von 1 bis 500 g Wirkstoff (= a.i.)/ha.

Für Thidiazuron liegt sie bevorzugt im Bereich von 10 bis 500 g a.i./ha, besonders bevorzugt 10 bis 300 g a.i./ha, ganz besonders bevorzugt 20 bis 200 g a.i./ha, insbesondere bevorzugt 20 bis 150g a.i./ha.

Bei Thidiazuron/Diuron Mischungen (typischerweise im Gewichtsverhältnis 2:1) liegt die Aufwandmenge im allgemeinem Bereich von 10 bis 500 g a.i./ha vorzugsweise bei 15 bis 300 g a.i./ha, besonders bevorzugt im Bereich von 20 bis 200 g a.i/ha, besonders bevorzugt 30 bis 200 g a.i./ha, insbesondere 30 bis 150 g a.i./ha.

Die Aufwandmengen für die Komponente (B) können je nach Wirkstoff in weiten Grenzen variieren und liegen im allgemeinen zwischen 0,1 und 5000 g a.i./ha.

Für die Komponente (B) sind als Aufwandmengen beispielsweise bevorzugt (Metribuzin und/oder Metamiron): 1 bis 1000 g a.i./ha, besonders bevorzugt 5 bis 500 g a.i./ha.

Die Gewichtsverhältnisse der Komponenten (A) : (B) können in weiten Grenzen variieren, sie liegen in der Regel zwischen 1 : 100 und 100 : 1.

Bevorzugt beträgt das ungefähre Verhältnis (A) : (B) 1 : 0,1-10, besonders bevorzugt 1 : 0,5-2.

Gegenstand der Erfindung sind auch Defoliantien (Entlaubungsmittel), d.h. Mittel zur Bewirkung des Blattabwurfs von Pflanzen, die Kombinationen aus den Wirkstoffen (A) und (B) sowie übliche Formulierungshilfsmittel (C) enthalten.

Die erfindungsgemäßen Kombinationen und deren Einzelwirkstoffe können auf verschiedene Art formuliert werden, je nachdem welche biologischen und/oder chemisch-physikalischen Parameter vorgegeben sind. Als Formulierungsmöglichkeiten kommen beispielsweise in Frage: Spritzpulver (WP), wasserlösliche Pulver (SP), wasserlösliche Konzentrate, emulgierbare Konzentrate (EC), Emulsionen (EW), wie Öl-in-Wasser- und Wasser-in-Öl-Emulsionen, versprühbare Lösungen, Suspensionskonzentrate (SC), Dispersionen auf Öl- oder Wasserbasis, wie Dispersion in Öl (ölhaltiges Suspensionskonzentrat, OD), ölmischbare Lösungen, Kapselsuspensionen (CS), Stäubemittel (DP), Granulate (GR) in Form von Mikro-, Sprüh-, Aufzugs- und Adsorptionsgranulaten, wasserdispergierbare Granulate (WG), wasserlösliche Granulate (SG), ULV (ultra-low-volume)-Formulierungen, Mikrokapseln und WSBs (water-soluble bags).

Die einzelnen Formulierungstypen sind im Prinzip bekannt und beispielsweise beschrieben in: Winnacker-Küchler, "Chemische Technologie", Band 7, C. Hanser Verlag München, 4. Aufl. 1986, Wade van Valkenburg, "Pesticide Formulations", Marcel Dekker, N.Y., 1973; K. Martens, "Spray Drying" Handbook, 3rd Ed. 1979, G. Goodwin Ltd. London.

Die notwendigen Formulierungshilfsmittel, wie Inertmaterialien, Tenside, Lösungsmittel und weitere Zusatzstoffe, sind ebenfalls bekannt und beispielsweise beschrieben in: Watkins, "Handbook of Insecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen Pflanzenschutzmitteln, wie Insektiziden, Akariziden, Herbiziden, Fungiziden, Safenern, anderen Wachstumsregulatoren und/oder Düngemitteln herstellen, z.B. in Form einer Fertigformulierung oder als Tank-Mix.

Daneben kann es vorteilhaft sein je nach Anwendungszweck auch weitere Formulierungshilfsmittel (C) und/oder weitere Zusätze getrennt zuzusetzen, wie beispielsweise Adjuvantien, wie z.B. ®Actirob B, Firma Novance.

Spritzpulver sind in Wasser gleichmäßig dispergierbare Präparate, die neben dem Wirkstoff außer einem Verdünnungs- oder Inertstoff noch Tenside ionischer und/oder nichtionischer Art (Netzmittel, Dispergiermittel), z.B. polyoxyethylierte Alkylphenole, polyoxethylierte Fettalkohole, polyoxethylierte Fettamine, Fettalkoholpolyglykolethersulfate, Alkansulfonate, Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten. Zur Herstellung der Spritzpulver werden die Wirkstoffe beispielsweise in üblichen Apparaturen, wie Hammermühlen, Gebläsemühlen und Luftstrahlmühlen, feingemahlen und gleichzeitig oder anschließend mit den Formulierungshilfsmitteln vermischt.

Emulgierbare Konzentrate werden durch Auflösen der Wirkstoffe in einem organischen Lösungsmittel, z.B. Butanol, Cyclohexanon, Dimethylformamid, Xylol oder auch höhersiedenden Aromaten oder Kohlenwasserstoffen, oder Mischungen der organischen Lösungsmittel unter Zusatz von einem oder mehreren Tensiden ionischer und/oder nichtionischer Art (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren, wie Fettsäurepolyglykolester, Alkylarylpolyglykolether, Fettalkoholpolyglykolether, Propylenoxid-Ethylenoxid-Kondensationsprodukte, Alkylpolyether, Sorbitanester wie z.B. Sorbitanfettsäureester oder Polyoxethylensorbitanester, wie Polyoxyethylensorbitanfettsäureester.

Stäubemittel erhält man durch Vermahlen der Wirkstoffe mit fein verteilten festen Stoffen, z.B. Talkum, natürlichen Tonen, wie Kaolin, Bentonit und Pyrophyllit, oder Diatomeenerde. Suspensionskonzentrate können auf Wasser- oder Ölbasis sein. Sie können beispielsweise durch Nass-Vermahlung mittels handelsüblicher Perlmühlen und gegebenenfalls Zusatz von Tensiden, wie sie z.B. oben bei den anderen Formulierungstypen bereits aufgeführt sind, hergestellt werden.

Emulsionen, z.B. Öl-in-Wasser-Emulsionen (EW), lassen sich beispielsweise mittels Rührern, Kolloidmühlen und/oder statischen Mischern unter Verwendung von wässrigen organischen Lösungsmitteln und gegebenenfalls Tensiden, wie sie z.B. oben bei den anderen Formulierungstypen bereits aufgeführt sind, herstellen.

Granulate können entweder durch Verdüsen der Wirkstoffe auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können die Wirkstoffe in der für die Herstellung von Düngemittelgranulaten üblichen Weise - gewünschtenfalls in Mischung mit Düngemitteln - granuliert werden.

Wasserdispergierbare Granulate werden in der Regel nach den üblichen Verfahren wie Sprühtrocknung, Wirbelbett-Granulierung, Teller-Granulierung, Mischung mit Hochgeschwindigkeitsmischern und Extrusion ohne festes Inertmaterial hergestellt.

Die erfindungsgemäßen Mischungen enthalten in der Regel 0,1 bis 99 Gew.-%, insbesondere 0,1 bis 95 Gew.-% Wirkstoffe der Komponente (A) und/oder (B).

In Spritzpulvern beträgt die Wirkstoffkonzentration z.B. etwa 10 bis 90 Gew.-%, der Rest zu 100 Gew.-% besteht aus üblichen Formulierungsbestandteilen. Bei emulgierbaren Konzentraten kann die Wirkstoffkonzentration etwa 1 bis 90 Gew.-% betragen. Staubförmige Formulierungen enthalten z.B. 1 bis 80, meist 5 bis 60 Gew.-% an Wirkstoff. Versprühbare Lösungen beispielsweise 0,05 bis 80, meistens 2 bis 50 Gew.-% Wirkstoff. Bei wasserdispergierbaren Granulaten hängt der Wirkstoffgehalt zum Teil davon ab, ob die wirksame Verbindung flüssig oder fest vorliegt und welche Granulierhilfsmittel, Füllstoffe usw. verwendet werden. Bei den in Wasser dispergierbaren Granulaten liegt der Gehalt an Wirkstoff beispielsweise zwischen 1 und 95 Gew.-%, meistens zwischen 10 und 80 Gew.-%.

Daneben enthalten die genannten Wirkstoffformulierungen gegebenenfalls die jeweils üblichen Haft-, Netz-, Dispergier-, Emulgier-, Penetrations-, Konservierungs-, Frostschutz- und Lösungsmittel, Füll-, Träger- und Farbstoffe, Entschäumer, Verdunstungshemmer und den pH-Wert und die Viskosität beeinflussende Mittel.

Als Kombinationspartner für die erfindungsgemäßen Wirkstoffe in Mischungsformulierungen oder im Tank-Mix sind beispielsweise auch bekannte Wirkstoffe einsetzbar, wie sie z.B. in Weed Research 26, 441-445 (1986), oder "The Pesticide Manual" (s.o.), und dort zitierter Literatur beschrieben sind.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser, und anschließend auf die Pflanzen appliziert. Dies schließt auch spezielle Applikationsvarianten ein, wie sie im Baumwollanbau üblich sind, z.B. die Applikation per Flugzeug. Staubförmige Zubereitungen, Boden- bzw. Streugranulate sowie versprühbare Lösungen werden vor der Anwendung üblicherweise nicht mehr mit weiteren inerten Stoffen verdünnt.

Gegenstand der Erfindung ist auch die Verwendung der Komponenten der erfindungsgemäßen Mischungen bzw. Mittel als Defoliantien, d.h. zur Bewirkung des Blattabwurfs von Pflanzen, vorzugsweise in geeigneten Nutzpflanzenkulturen, wie Baumwolle, Sonnenblumen oder Kartoffeln. Besonders bevorzugt ist die Verwendung als Entlaubungsmittel in Baumwollkulturen.

Ebenso Gegenstand der Erfindung ist ein Verfahren zur Entlaubung einer Pflanze, vorzugsweise einer Nutzpflanze, besonders bevorzugt einer Baumwollpflanze, **dadurch gekennzeichnet, dass** man die Pflanze mit den Komponenten einer erfindungsgemäßen Mischung bzw. eines erfindungsgemäßen Mittel behandelt.

Gegenstand der Erfindung ist auch die Verwendung der Komponenten der erfindungsgemäßen Mischungen bzw. Mittel zur Reduktion des Wiederaustriebs von Pflanzen, vorzugsweise in geeigneten Nutzpflanzenkulturen, wie Baumwolle, Sonnenblumen oder Kartoffeln. Besonders bevorzugt ist die Verwendung zur Reduktion des Wiederaustriebs in Baumwollkulturen.

Ebenso Gegenstand der Erfindung ist ein Verfahren zur Reduktion des Wiederaustriebs einer Pflanze, vorzugsweise einer Nutzpflanze, besonders bevorzugt einer Baumwollpflanze, **dadurch gekennzeichnet, dass** man die Pflanze mit den Komponenten einer erfindungsgemäßen Mischung bzw. eines erfindungsgemäßen Mittel behandelt.

Selbstredend können die Mischungen bzw. Mittel und die Verfahren auch zur Behandlung gentechnisch veränderter (transgener) Pflanzen, vorzugsweise Nutzpflanzen, besonders bevorzugt Baumwolle, eingesetzt werden, wobei solche Pflanzen beispielsweise ein oder mehrere Fremdgene zur Erzielung von Insektizid- und/oder Herbizidresistenzen enthalten.

Die Erfindung wird durch die Beispiele näher erläutert, ohne sie dadurch einzuschränken.

### Beispiele

### 1. Herstellung der Spritzbrühen

Es wurde eine Wasseraufwandmenge von 300 l/ha vorgelegt. Anschließend wurden die Komponenten Herbizid und Adjuvant gemäß der in den Tabellen angegebenen Art und Aufwandmengen unter Rühren zugegeben, so dass eine homogene Spritzbrühe entstand. Dabei wurden die Wirkstoffe als Suspensionskonzentrate (Thidiazuron als ®Escalate liquid SC500, Metribuzin als ®Sencor SC480, Thidiazuron+Diuron als ®Dropp Ultra SC180) der Firma Bayer CropScience AG eingesetzt. Als Adjuvant wurde ®Actirob B (Novance) verwendet.

### 2. Biologische Versuche

### 2.1 Versuchmethode

Die nachfolgend verwendeten Abkürzungen bedeuten:
g a.i./ha = Gramm Aktivsubstanz/Hektar
l/ha = Liter/Hektar

Baumwollsamen der Sorte "Carmen" wurden in einer Tiefe von 1 cm ausgesät und in einer Gewächshaus-Kabine (20000-50000 LUX Licht: 14 Std./Tag; Temperatur: Nacht 22°C - Tag 30°C; Rel. Luftfeuchte: Nacht 65 % - Tag 50 %) bis zum 6-8 Blattstadium kultiviert.

Die Pflanzen wurden auf einer Laborspritzbahn mit Spritzbrühen von Thidiazuron und Thidiazuron mit Kombinationspartnern behandelt. Die Wasseraufwandmenge für die Spritzapplikation betrug 300 l/ha. Nach der Behandlung wurden die Pflanzen wieder in der Gewächshaus-Kabine aufgestellt.

4 und 8 Tage nach der Applikation wurde die Blattfallwirkung bewertet (Blattfall %):
0 % = keine erkennbare Wirkung im Vergleich zu unbehandelten Pflanzen;
100 % = alle Blätter abgefallen.

2 Wochen nach Applikation wurde der Wiederaustrieb der Pflanzen durch Wiegen der neu gebildeten Blattmasse bewertet. Die Tabellenwerte drücken den Wiederaustrieb prozentual zur unbehandelten Kontrolle aus.

### 2.2 Kombinationen von (A) Thidiazuron mit (B) Metribuzin - Wirkung auf Blattfall

Die Auswertungen ergaben die in Tabelle 1 aufgeführten Resultate, die eine synergistische Wirkung bei der Blattfallwirkung durch die erfindungsgemäßen Kombinationen erkennen lassen.

**Tabelle 1: Versuch 1 - Auswertung 4 und 8 Tage nach Applikation**

| Komponenten | Dosis [g a.i./ha] | Blattfall [%] 4 Tage n. Appl. | Blattfall [%] 8 Tage n. Appl. |
|---|---|---|---|
| unbehandelt | | 0 | 0 |
| Thidiazuron * | 30 | 0 | 63 |
| Metribuzin * | 15 | 0 | 0 |
| Metribuzin * | 30 | 0 | 0 |
| Thidiazuron + | 30 + 15 | 22 | 100 |
| Metribuzin * | | | |
| Thidiazuron + | 30 + 30 | 32 | 100 |
| Metribuzin * | | | |

| | | | |
|---|---|---|---|
| *den Spritzbrühen wurde 1 l/ha ®Actirob B zugesetzt | | | |

### 2.3 Kombinationen von (A) Thidiazuron und Diuron mit (B) Metribuzin - Wirkung auf Blattfall

Die Auswertungen ergaben die in Tabelle 2 aufgeführten Resultate, die eine synergistische Wirkung bei der Blattfallwirkung durch die erfindungsgemäßen Kombinationen erkennen lassen.

**Tabelle 2: Versuch 2 - Auswertung 4 und 8 Tage nach Applikation**

| Komponenten | Dosis [g a.i./ha] | Blattfall [%] 4 Tage n. Appl. | Blattfall [%] 8 Tage n. Appl. |
|---|---|---|---|
| unbehandelt | | 0 | 0 |
| Thidiazuron + Diuron * | 30 +15 | 5 | 75 |
| Metribuzin * | 15 | 0 | 0 |
| Metribuzin * | 30 | 0 | 0 |
| Thidiazuron + Diuron + | 30 + 15 + 15 | 38 | 100 |
| Metribuzin * | | | |
| Thidiazuron + Diuron + | 30 + 15 + 30 | 54 | 100 |
| Metribuzin * | | | |

| | | | |
|---|---|---|---|
| *den Spritzbrühen wurde 1 l/ha ®Actirob B zugesetzt | | | |

### 2.4 Kombinationen von (A) Thidiazuron mit (B) Metribuzin - Wirkung auf den Wiederaustrieb

Die Auswertungen ergaben die in Tabelle 3 aufgeführten Resultate, die eine synergistische Wirkung bei der Reduktion des Wiederaustriebs durch die erfindungsgemäßen Kombinationen erkennen lassen.

**Tabelle 3: Auswertung 2 Wochen nach Applikation**

| Komponenten | Dosis [g a.i./ha] | Wiederaustrieb ** [%] |
|---|---|---|
| Metribuzin * | 15 | 0 |
| Metribuzin * | 30 | 0 |
| Thidiazuron * | 30 | + 60 |
| Thidiazuron + Metribuzin * | 30 + 15 | + 27 |
| Thidiazuron + Metribuzin * | 30 + 30 | + 12 |

| | | |
|---|---|---|
| *den Spritzbrühen wurde 1 l/ha ®Actirob B zugesetzt; 2 Wiederholungen ** in Prozent zur unbehandelten Kontrolle | | |

### 2.5 Kombinationen von (A) Thidiazuron und Diuron mit (B) Metribuzin - Wirkung auf den Wiederaustrieb

Die Auswertungen ergaben die in Tabelle 4 aufgeführten Resultate, die eine synergistische Wirkung bei der Reduktion des Wiederaustriebs durch die erfindungsgemäßen Kombinationen erkennen lassen.

**Tabelle 4: Auswertung 2 Wochen nach Applikation**

| Komponenten | Dosis [g a.i./ha] | Wiederaustrieb ** [%] |
|---|---|---|
| Metribuzin * | 15 | 0 |
| Metribuzin | 30 | 0 |
| Thidiazuron + Diuron * | 30 +15 | + 45 |
| Thidiazuron + Diuron + Metribuzin * | 30 + 15 + 15 | + 20 |
| Thidiazuron + Diuron + Metribuzin * | 30 + 15 + 30 | + 9 |

| | | |
|---|---|---|
| *den Spritzbrühen wurde 1 l/ha ®Actirob B zugesetzt; 2 Wiederholungen ** in Prozent zur unbehandelten Kontrolle | | |

## Patentansprüche

1. Mischung, enthaltend
(A) Thidiazuron und
(B) eine oder mehrere Verbindungen aus der Gruppe der herbiziden 1,2,4-Triazinone.

2. Mischung gemäß Anspruch 1, enthaltend als Komponente (A) Thidiazuron und Diuron.

3. Mischung gemäß Anspruch 1 oder 2, enthaltend als Komponente (B) Metribuzin und/oder Metamiron, vorzugsweise Metribuzin.

4. Verwendung der Komponenten einer Mischung definiert gemäß einem oder mehreren der Ansprüche 1 bis 3 zum Entlauben von Pflanzen.

5. Verwendung der Komponenten einer Mischung definiert gemäß einem oder mehreren der Ansprüche 1 bis 3 zur Reduktion des Wiederaustriebs von Pflanzen.

6. Verwendung gemäß einem oder mehreren der Ansprüche 4 und 5, **dadurch gekennzeichnet, dass** die Pflanzen Baumwollpflanzen sind.

7. Verwendung gemäß Anspruch 6, **dadurch gekennzeichnet, dass** die Baumwollpflanzen transgene Baumwollpflanzen sind.

8. Entlaubungsmittel, enthaltend
(A) Thidiazuron und
(B) eine oder mehrere Verbindungen aus der Gruppe der herbiziden 1,2,4-Triazinone und
(C) ein oder mehrere Formulierungshilfsmittel.

9. Mittel gemäß Anspruch 8, enthaltend als Komponente (A) Thidiazuron und Diuron.

10. Mittel gemäß einem oder mehreren der Ansprüche 8 und 9, enthaltend als Komponente (B) Metribuzin und/oder Metamiron, vorzugsweise Metribuzin.

11. Verfahren zum Entlauben einer Pflanze, **dadurch gekennzeichnet, dass** man die Pflanze mit den Komponenten einer Mischung definiert gemäß einem oder mehreren der Ansprüche 1 bis 3 oder den Komponenten eines Mittels definiert gemäß einem oder mehreren der Ansprüche 8 bis 10 behandelt.

12. Verfahren zur Reduktion des Wiederaustriebs von Pflanzen, **dadurch gekennzeichnet, dass** man die Pflanze mit den Komponenten einer Mischung definiert gemäß einem oder mehreren der Ansprüche 1 bis 3 oder den Komponenten eines Mittels definiert gemäß einem oder mehreren der Ansprüche 8 bis 10 behandelt.

13. Verfahren gemäß einem oder mehreren der Ansprüche 11 und 12, **dadurch gekennzeichnet, dass** die Pflanzen Baumwollpflanzen sind.

14. Verfahren gemäß Anspruch 13, **dadurch gekennzeichnet, dass** die Baumwollpflanzen transgene Baumwollpflanzen sind.
